# EUROPEAN PATENT SPECIFICATION

(11) **EP 1 595 239 B1**
(45) Date of publication and mention of the grant of the patent: **15.08.2007**
(21) Application number: 04710190.2
(22) Date of filing: 11.02.2004
(51) Int. Cl.: G09F 9/00, G09F 25/00

(54) **ELECTRONIC DISPLAY DEVICE FOR FLOOR ADVERTISING/MESSAGING**
ELEKTRONISCHE FUSSBODENWERBEANZEIGEVORRICHTUNG
DISPOSITIF D'AFFICHAGE ELECTRONIQUE POUR PUBLICITE OU MESSAGES AU NIVEAU DU SOL

(30) Priority: 20.02.2003 US 448598 P; 15.04.2003 US 413219
(43) Date of publication of application: 16.11.2005
(73) Proprietor: IntelliMats, LLC, Roanoke VA 24018 (US)
(72) Inventor: BLUM, Ronald, D., Roanoke, VA 24017 (US); DUSTON, Dwight, P., Laguna Niguel, CA 92677 (US); KOKONASKI, William, Gig Harbor, WA 98335 (US)
(74) Representative: Joly, Jean-Jacques
(86) International application number: PCT/US2004/003956
(87) International publication number: WO 2004/075147

(56) References cited:
- WO-A-92/09061
- US-A- 5 185 948
- US-A- 5 848 830
- US-A1- 2001 045 893

## Description

### Field of the invention

Embodiments of the present invention relate to electronic display devices, and more particularly to electronic display devices configured to be used on a floor of commercial establishments.

### Background

Advertising and messaging using displays mounted to walls or ceilings is common. On the other hand, one kind of space that has great potential for advertising and messaging, but has been largely overlooked, is floor space.

There have been efforts to exploit floor space for advertising. Adhesive (i.e., "stick-on") floor decals are known. Such decals may include a colorful image and convey some kind of advertising message, such as "Drink Coke". Such an advertising medium is limited, however, by the fact that the message is static and not easily changed. On the other hand, U.S. Patent 6,417,778 describes a modifiable electronic display associated with a floor that enables images and text to be easily changed, allowing an advertising message to be quickly adaptable and efficiently targeted toward desired customers.

The foregoing modifiable electronic display, however, like static floor decals, is configured to be substantially co-planar with the floor, and as such necessarily occupies a certain amount of floor "real estate". In commercial establishments where floor space may be at a premium, merchants seeking to garner the benefits of floor advertising may be faced with an unwelcome choice between using floor space for shelving or for advertising/messaging.

In consideration of this, the present inventors have recognized that there exists, in many commercial establishments, floor space that is not utilized in any meaningful way, and for the most part simply collects dust. This is a space under the shelving but typically open to view, often known as "kick space". More specifically, the present inventors have observed that in most commercial shelving there is a clearance or kick space between the floor and a bottom surface of the shelving, for example the underside of a bottom shelf, that is largely unutilized. Accordingly, embodiments of the present invention relate to a novel system and method for effectively exploiting this unused space for dynamic electronic advertising and messaging.

### Brief Description of the Drawings

Fig. 1 is a illustration an electronic display device according to an embodiment of the present invention;
Fig. 2 shows the electronic display device at least partly received within a kick space of commercial shelving;
Fig. 3 shows electronics associated with the electronic display device;
Fig. 4 shows an alternative embodiment of an electronic display device according to the invention;
Fig. 5 shows the embodiment of Fig. 4 at least partly received within a kick space of commercial shelving;
Fig. 6 shows another alternative embodiment of an electronic display device according to the invention;
Fig. 7 shows an enlarged version of the embodiment of Fig. 6;
Figs. 8 and 9 show the embodiment of Fig. 6 at least partly received within a kick space of commercial shelving;
Figs. 10-15 show various views of still another embodiment of an electronic display device associated with a floor covering;
Fig. 16 shows an electronic display device arranged within kick space of commercial shelving and associated with an audio device;
Fig. 17 shows a plurality of electronic display devices arranged within kick space of commercial shelving and associated with a plurality of audio devices;
Fig. 18 shows one example of a device for configuring an electronic display device locally with arbitrary content; and
Figs. 19-21 show various examples of systems for configuring a plurality of electronic display devices remotely via networks.

### Detailed Description

Embodiments of the present invention relate to an electronic display device configured for use at the base of commercial shelving: i.e., shelving used in commercial establishments, such as grocery stores or other retail stores, to store goods and products for public display and sale. More specifically, the electronic display device may be configured to be at least partly received within a kick space of commercial shelving, and to display electronically modifiable arbitrary content, including at least graphics and alphanumeric information. It is contemplated that typically the content will be advertising content or promotional content, and relate to the goods and products on the shelves above or near the electronic display device, or elsewhere in the commercial establishment. For example, the display could announce sales and prices, provide product descriptions, direct customers to specific locations within a commercial establishment, and the like.

According to the present embodiments, the electronic display device could be associated with an audio device. The audio device could be incorporated into the electronic display device, or could be arranged in the vicinity. The audio device could be configured to output audio content related to the content of an associated display.

According to further embodiments, there may be a plurality of electronic display devices and associated audio devices arranged within a commercial establishment. The electronic display devices and associated audio devices could be individually configurable with desired content, either locally or remotely. For example, an electronic display device could be configured by some operation on the device itself locally, for example by manually connecting an I/O port of the device to a storage device containing digital data for downloading to the display device. Alternatively, the plurality of electronic display devices and associated audio devices could be networked together, and content could be downloaded from a central control location to the display devices and audio devices.

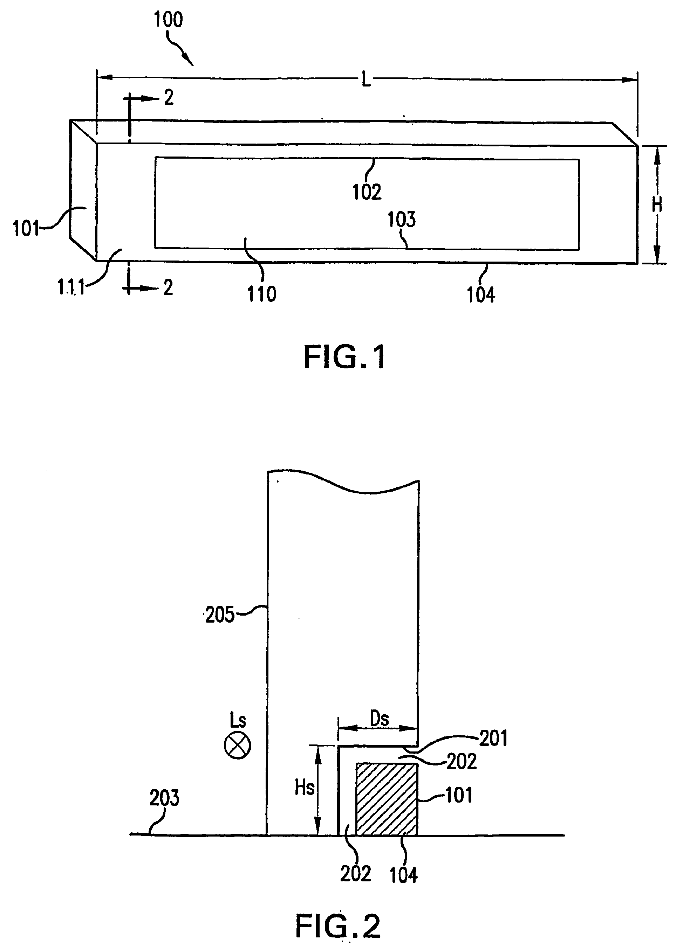

Fig. 1 shows an electronic display device 100 according to embodiments of the present invention. In keeping with its contemplated application, the electronic display device 100 may have a form and dimensions configured for a kick space of commercial shelving. Fig. 2 is an orthogonal view showing commercial shelving 205 such as is commonly used in, for example, grocery stores or other retail commercial establishments, to store and publicly display items for sale. As discussed earlier, most such commercial shelving has a "kick space" such as space 202 between a lower surface 201 of the shelving and a floor 203. As further discussed earlier, in conceiving the present invention, it has been recognized by the inventors that space 202 represents space within a store or commercial establishment that is not utilized. Examples of typical dimensions for space 202 are a maximum height H_{S} of approximately 304.8 mm (12 inches), a maximum depth D_{S} of approximately 914.4 mm (36 inches), and a length L_{S} (in a direction orthogonal to both H_{S} and D_{S}) of at least 304.8 mm (12 inches).

The concept of "kick space" is not limited to shelves. Fig. 2 is also intended to represent any kind of structure, for example, a counter, that forms a projection or superior ledge over a space 202 between a lower surface 201 and a floor.

Accordingly, to effectively utilize the space 202, the electronic display device comprises a housing 101 and an elongated display area 110 associated with the housing. Here, "housing" means any structure or material used in framing, supporting, or providing a physical medium for the display area 110. The display area 110 may be smaller than the area of a front face 111 of the housing. Alternatively, the display area 110 may be co-extensive with (i.e., occupy substantially the entire surface area of) the front face 111 of the housing. The display area 110 comprises an upper edge 102 and a lower edge 103. The housing further has a base or bottom surface 104. A length L of the housing and corresponding display area may be at least twice a height H of the housing and corresponding display area.

Fig. 2 includes a sectional view of the electronic display device 100. As illustrated, the electronic display device 100 may be configured to be at least partly received within the space 202, between a lower surface 201 of the shelving 205 and the floor 203. In keeping with this application, the length L of the housing 101 and corresponding display area 110 may be between 254.0 and 2302.0 mm (10 and 80 inches), with a preferred length of between 508.0 and 1016.0 mm (20 and 40 inches). The height H of the housing 101 and corresponding display area 110 may be between 50.8 and 203.2 mm (2 and 8 inches), with a preferred height of between 101.6 and 152.4 mm (4 and 6 inches). It is noted that the clearance shown between the housing 101 and the lower surface 201 is illustrative of only one possible configuration. In other possible configurations, clearances may be smaller or greater, or the housing 101 may contact or abut the lower surface 201. The electronic display device may be placed directly or indirectly on a floor. "Directly" means that the base of the housing is in contact with or abutting the floor. "Indirectly" means that there may be some object, such as a cushioning or supporting mat or platform, or legs, or feet, or the like, interposed between the housing and the floor.

At least a portion of the base 104 of the housing 101 may be no more than three inches from the lower edge 103 of the display area 110. Thus, when the electronic display device 100 is placed directly on a floor, at least a portion of the lower edge 103 may be no more than 76.2 mm (3 inches) from the floor. At least a portion of the upper edge 102 of the display area may be no more than 203.2 mm (8 inches) from the lower edge 103. The electronic display device 100 is portable and free-standing, but this does not preclude its being affixed to the floor or to the shelving in some fashion.

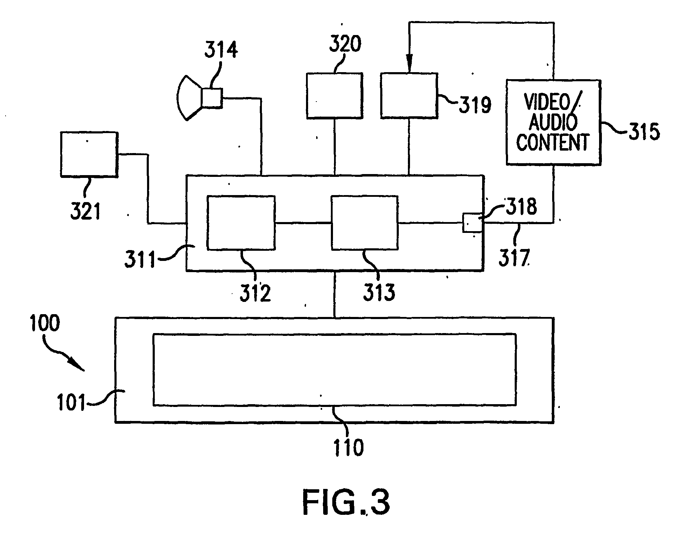

The electronic display device may be configured to display arbitrary content. As noted above, it is expected that in the most common application, the content will be advertising or promotional, but any desired content is possible. For example, the content could include product descriptions and prices. Fig.3 shows one possible arrangement for enabling arbitrary content to be displayed. The display area 110 may be coupled to electronics 311 comprising a programmable control device 312 coupled to a storage medium 313. The control device 312 may include any kind of electronic logic circuit, for example, a general microprocessor configurable with software, or an ASIC (application specific integrated circuit). A driver of the electronic display may be integrated with the control device or build into an ASIC. Storage medium 313 could be any form of medium suitable for storing digital data, including flash or other non-volatile solid-state electronic storage, EEPROM (electronically erasable and programmable read only memory), or magnetic and or optical disk storage. The electronics 311 may be coupled to an electric power source 321.

The electronics 111 may further comprise an I/O port 318, for example, a USB (Universal Serial Bus) port, which may be coupled to external sources of video and/or audio content 315 via a wired or wireless connection 317. According to embodiments, the video/audio content 315 will advantageously be in digital form, allowing it to be readily downloaded to the storage medium 313 and displayed on the display area 110 under the control of the control device 312 as configured by a user. The video/audio content 315 could include control software, or the control software could be provided from a different source. The control software could be loaded into the storage medium 313 and executed by the control device 312, for example, in order to implement a schedule of changing display content. For example, the control device 312 could be programmed to execute a scheduling algorithm that accessed stored video/audio files in a predetermined order according to a list of identifiers in a look-up table. To change displayed content, a given video/audio file accessed by a particular identifier could be replaced with new content, without needing to update the scheduling algorithm. Conversely, the order the files are displayed can be changed by only modifying the look-up table, without modifying the scheduling algorithm or file content. Of course, both the look-up table and the video/audio files could be modified to change the schedule of what is displayed without modifying the scheduling algorithm.

If in digital form, the video/audio content 315 could be stored on, for example, disk or CD-ROM. However, the video/audio content 315 could take any form. For example, the video/audio content 315 could be stored on videotape. Accordingly, the control electronics 311 may further be coupled to an I/O device 319 adapted to input the video/audio content in whatever form it might take. Thus I/O device 319 could include a tape player, disk drive/reader, CD-ROM drive/reader, or similar device, and receive video/audio content 315 for display in the display area 110. It is further possible that the I/O device 319 could include a capability of handling video/audio content in the form of a TV signal, either broadcast or through a closed circuit system. The electronics 311 may further be coupled to an audio device 314 for outputting audio content.

A user interface 320 may be coupled to the electronics 311 to enable a user to configure the electronics 311 as desired. The user interface could include, for example, a keyboard, mouse and video monitor, a manually operated control panel (e.g., a pushbutton panel), or both. For example, a user could configure the electronics 311 using interface 320 by causing control software to be loaded into the storage medium 313 via I/O device 319 and executed by the control device 312, and/or by using a manually operated control panel with inputs such as ON/OFF, display mode options and the like. Depending on input entered by a user via user interface 320, arbitrary video/audio content 315 may be displayed on display area 110. The display area 110 of the electronic display device 100 may be implemented using any known technique or system. For example, the display area could utilize liquid crystal (LCD), light-emitting diode (LED), organic light-emitting diode (OLED), plasma or cathode ray tube (CRT) technologies, light emitting polymer, electronic ink, electronic paper, either solely or in any combination, to generate displays. It has been observed by the inventors that space 202 is typically darkened somewhat, due to the lower surface 201 blocking light from above. This darkened region provides good contrast for the display area 110.

The display area 110 is capable of displaying at least alphanumeric data and graphic images. The content may include alphanumeric data alone, graphic images (e.g., pictures) alone, or combinations of the two, either static, moving, or both static and moving, in accordance with selected video content. Moving alphanumeric data and images may, for example, be scrolled. The alphanumeric data and graphic images could be black and white or in full color. Further, the display area 110 may include more than one distinct display: that is, the display area could be partitioned with respect to content. For example, the display area could include two or more different "windows," each displaying different content. Such a partitioning of displays is well known, for example, in "split-screen" TV and through the widespread use of various graphics software applications, including the ubiquitous "Windows" software by Microsoft®.

The electronics 311 and associated devices, including the audio device 314, user interface 320 and I/O device 319, could be completely or partly contained with the housing 101 of the electronic display device 100, or could be completely external thereto. Further white the description of Fig. 3 above referred to the embodiment of the electronic display device 100 of Fig. 1 as an illustrative example, it should be understood that electronics 311 or the like, and associated devices, may be incorporated in, coupled to or otherwise associated with any of the various embodiments referred to herein by the general term "electronic display device".

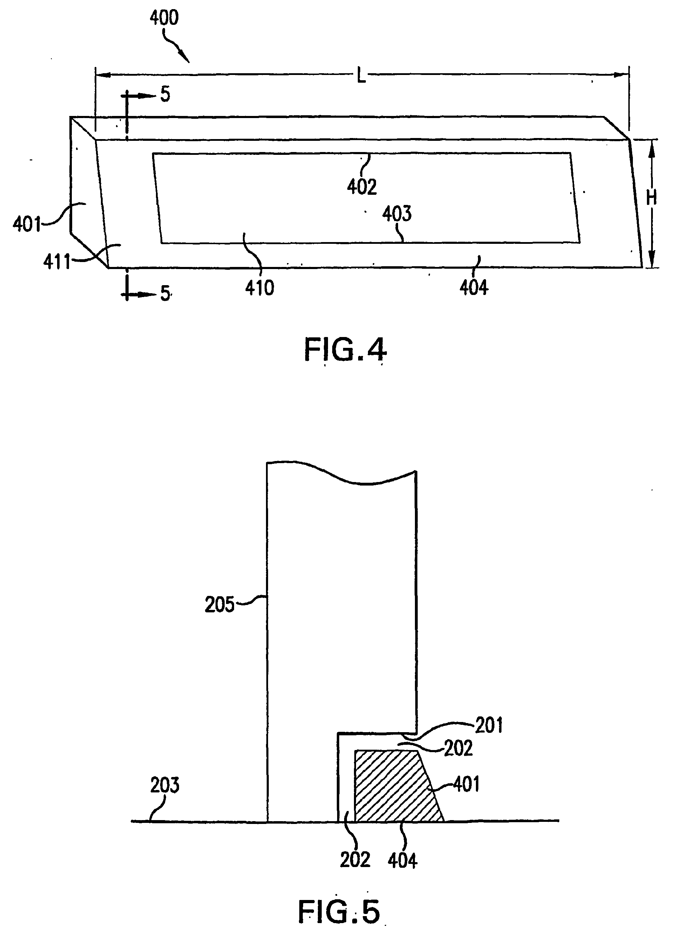

Figure 4 illustrates one of possible alternative embodiments according to the present invention. The electronic display device 400 of Fig. 4 comprises a housing 401 and an elongated display area 410 associated with the housing. The display area 410 may be co-extensive with a front face 411 of the housing, or smaller. The display area 410 comprises an upper edge 402 and a lower edge 403. The housing further has a base or bottom surface 404. The length L of the housing and corresponding display area 410 may be at least twice a height H of the housing and corresponding display area. Fig. 5 shows commercial shelving 205 with kick space 202, and includes a sectional view of the electronic display device 400. As shown in Fig. 5, the electronic display device 400 may be configured to be at least partly received within the space 202, between a lower surface 201 of the shelving 205 and the floor 203. The length L of the housing 401 and corresponding display area may be between 10 and 80 inches, with a preferred length of between 20 and 40 inches. The height H of the housing 401 and corresponding display area may be between 50.8 and 203.2 mm (2 and 8 inches), with a preferred height of between 101.6 and 152.4 mm (4 and 6 inches). At least a portion of the base 404 of the housing 401 may be no more than three inches from the lower edge 403 of the display area 410. Thus, when the electronic display device 400 is placed directly on a floor 203, at least a portion of the lower edge 403 may be no more than 76.2 mm (3 inches) from the floor. At least a portion of the upper edge 402 of the display area may be no more than 203.2 mm (8 inches) from the lower edge 403. The electronic display device 400 is portable and free-standing, but this does not preclude its being affixed to the floor or to the shelving in some fashion. As shown in Fig. 5, at least a portion of the display area 410 is inclined, which may enable it to be more easily viewed.

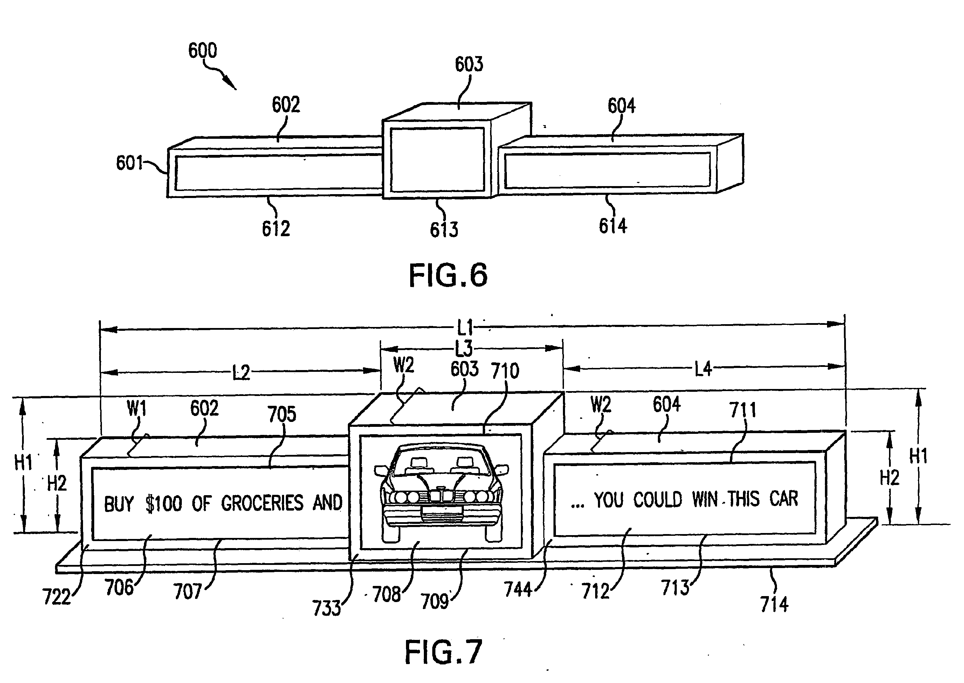

Fig. 6 shows another possible embodiment. As seen in Fig. 6, the housing and corresponding display area of the electronic display device need not have a uniform or monolithic shape as in Figs. 1 and 4, but may instead comprise multiple portions differently dimensioned from each other. For example, electronic display device 600 comprises three separately articulated portions having different dimensions: a first portion 602, a second portion 603, and a third portion 604. The second portion 603 forms a module that is approximately centrally located with respect to the first and third portions 602 and 604. The first and third portions 602 and 604 form modules that are laterally arranged with respect to the central module 603. The first, second and third portions 602, 603 and 604 may each have a base or bottom surface 612, 613 and 614 respectively.

Fig. 7 shows more details of electronic display device 600. Housing 601 and corresponding overall display areas 706, 708, 712 has/have an overall length L1. The overall length L1 may be at least twice as great as a height H1 of the housing 601 and corresponding respective display areas.

More specifically, the second portion 603 may have a height H1 that is greater than a height H2 of the first portion 602, and a width W2 that is greater than a width W1 of the first portion 602. On the other hand, the first portion 602 may have a length L2 that is greater than a length L3 of the second portion 603. The third portion 604 may have a height H2 and width W3 that is less than a height H1 and width W2 of the second portion 603, and a length L4 that is greater than a length L3 of the second portion 603. The third portion 604 may have substantially the same dimensions as the first portion 602. The electronic display device may further include a separately articulated base 714.

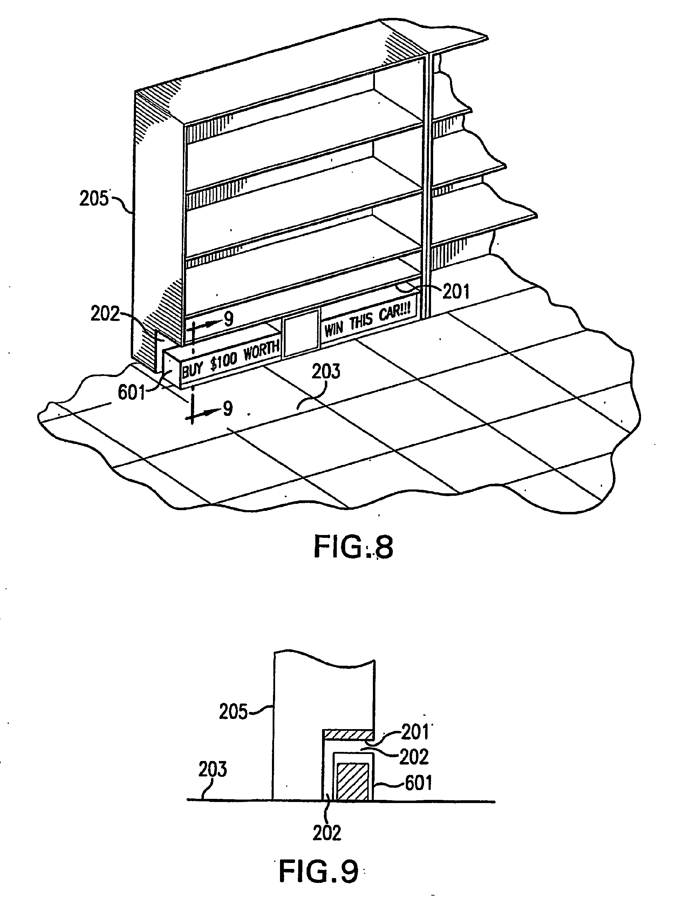

Fig. 8 is a perspective view showing electronic display device 600 at least partly received within the kick space 202 of commercial shelving 200, between a lower surface 201 of the shelving and the floor 203. Fig. 8 includes a sectional view of the electronic display device 600 arranged at least partly within the space 202. In keeping with this application, the overall length L1 of the housing 601 and corresponding overall display area may be between 254.0 and 2032.0 mm (10 and 80 inches), with a preferred length of between 508.0 and 1016.0 mm (20 and 40 inches). The lengths L2 and L4, respectively, of lateral portions 602 and 604 and corresponding display areas 706 and 712 of the housing 601 may be between 152.4 and 762.0 mm (6 and 30 inches), with a preferred length of between 152.4 mm and 381.0 mm (6 and 15 inches). The length L3 of the central portion 603 and corresponding display area 708 may be between 101.6 and 508.0 mm (4 and 20 inches). The height H1 of the housing 601 and corresponding respective display areas may be between 50.8 and 203.2 mm (2 and 8 inches), with a preferred height of between 101.6 and 152.4 mm (4 and 6 inches).

Referring now to Fig. 7, the first portion 602 has a display area 706 with a lower edge 707 and an upper edge 705. The display area 706 may be co-extensive with a front face 722 of the first portion, or smaller. The second portion 603 has a display area 708 with a lower edge 709 and an upper edge 710. The display area 708 may be co-extensive with a front face 733 of the second portion 603, or smaller. The third portion 604 has a display area 712 with a lower edge 713 and an upper edge 711. The display area 712 may be co-extensive with a front face 744 of the third portion 604, or smaller. At least a portion of the bases 612, 613, 613 or 714 may be no more than 76.2 mm (3 inches) from at least a portion of at least one of the lower edges 707, 709 and 713 of the display areas 706, 708, 712. Thus, when the electronic display device 600 is placed directly on a floor, at least a portion of at least one of the lower edges 707, 709 and 713 may be no more than 76.2 mm (3 inches) from the floor 203. At least a portion of at least one of the upper edges 705, 710, 711 of the respective display areas may be no more than 203.2 mm (8 inches) from a corresponding lower edge. The electronic display device 600 is portable and free-standing, but this does not preclude its being affixed to the floor or to the shelving in some fashion.

The display areas 706, 708 and 712 show one example of possible content, specifically, advertising or promotional content wherein alphanumeric information "Buy $100 of groceries and you could win this car" relates to, complements or supplements a graphic image of a car.

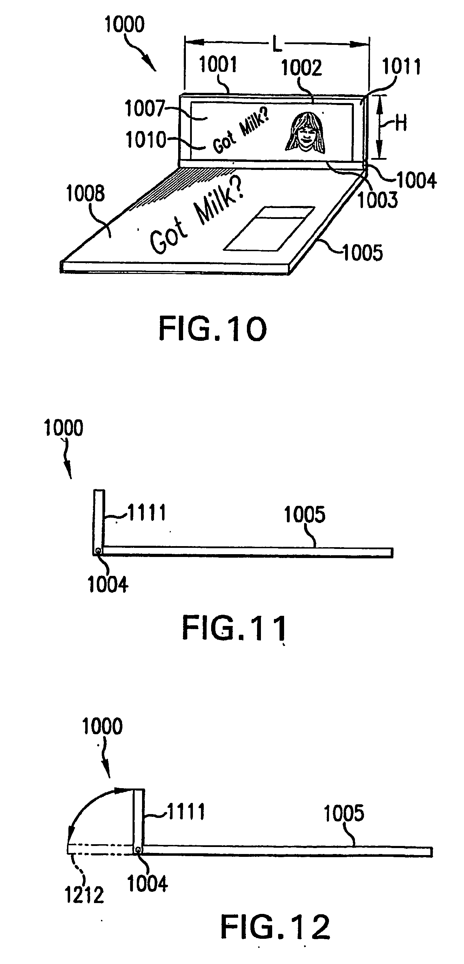

Fig. 10 illustrates another possible embodiment of an electronic display device 1000 according to the present invention. Fig. 10 shows a perspective view of an electronic display device 1000 that is associated with a floor covering 1005. The electronic display device 1000 and the floor covering 1005 could be permanently attached to each other, configured to be readily detached and re-attached to each other, or otherwise associated. The electronic display device 1000 comprises a housing 1001 and an elongated display area 1010 associated with the housing. The display area 1010 may be co-extensive with a front face 1011 of the housing, or smaller. The display area 1010 comprises an upper edge 1002 and a lower edge 1003.

The floor covering 1005 could be movable or affixed to a floor. The electronic display device 1000 may be rotatably coupled to the floor covering 1003 at a pivot point 1004, so as to have an incline that is adjustable relative to the floor, or to a vertical at substantially right angles to the floor. The pivot point 1004 could be implemented, for example, by a hinge. Figs. 11 and 12 are side orthogonal views illustrating a range of angles, relative to a floor or to the floor covering 1005, at which the electronic display device 1000 could be positioned. For example, as shown in Fig. 11, the electronic display device 1000 could be positioned at a first position 1111 which is substantially vertical or at substantially right angles to the floor covering 1005, or could be rotated to a second position 1212, as shown in Fig. 12, in which the electronic display device 1000 is substantially horizontal or substantially co-planar with the floor covering 1005. Further, the electronic display device 1000 could be positioned at any angle between positions 1111 and 1212. The electronic display device 1000 could be comparatively thin and lightweight so that when it was affixed to the floor covering 1005, the floor covering provided a stable support to the electronic display device. Alternatively, the floor covering 1005 could be fixed, glued, bonded or otherwise adhered to a floor, which would also help to provide a stable support for the electronic display device 1000.

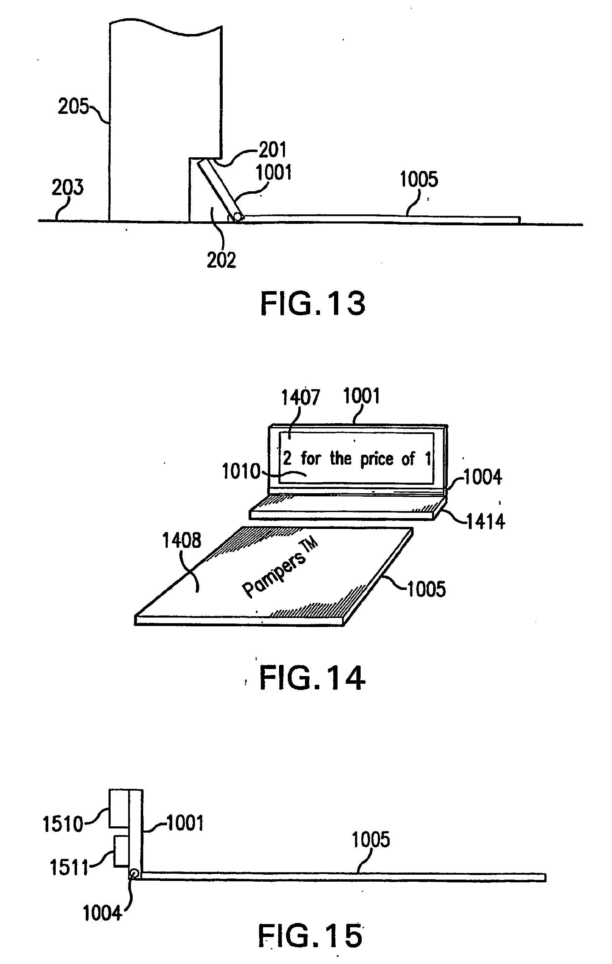

Fig. 13 shows a side orthogonal view of the electronic display device 1000 being at least partly received within a space 202 between a floor 203 and a lower surface 201 of commercial shelving 200. The electronic display device 1000 may be inclined to a convenient viewing angle as shown in Fig. 13. In accordance with its application in space 202, the electronic display device 1000 may have dimensions similar to those described above in connection with other embodiments of the electronic display device. That is, referring now to Fig. 10, the electronic display device 1000 may have a housing 1001 and corresponding display area 1010 with a length L that is at least twice as great as a height H of the housing and corresponding display area. The length L of the housing 1001 and corresponding display area 1010 may be between 254.0 and 2032.0 mm (10 and 80 inches), with a preferred length of between 508.0 and 1016.0 mm (20 and 40 inches). The height H of the housing 1001 and corresponding display area 1010 may be between 50.8 and 203.2 mm (2 and 8 inches), with a preferred height of between 101.6 and 152.4 mm (4 and 6 inches). When the electronic display device 1000 is placed directly on a floor 203, at least a portion of the lower edge 1003 of the display area 1010 may be no more than 76.2 mm (3 inches) from the floor 203. At least a portion of the upper edge 1002 of the display area may be no more than 203.2 mm (8 inches) from the lower edge 1003.

As noted earlier, the electronic display device 1000 may be associated with a floor covering 1005. In embodiments, the floor covering 1005 includes graphic and/or alphanumeric information, presented in either a static or dynamic (e.g., scrolling or otherwise moving or changing) format. For example, the floor covering could be formed as a "decal" that adheres to the floor and conveys some kind of illustrated advertising or other message. Alternatively, the floor covering could itself include a modifiable electronic display that was substantially flat and co-planar with the floor, and configured for being walked over, as described in U.S. Patent No. 6,417,778.

When in use in a commercial establishment, for example, the floor covering 1005 may be unattached to the electronic display device 1000, but abutting, adjacent or in close proximity thereto. Content, e.g., alphanumeric information and/or images, displayed on the floor covering 1005 may be related to or complementary or supplemental to content displayed on an associated electronic display device 1000. Thus, the scope of "associated with a floor covering" with reference to the electronic display device 1000 includes not only embodiments in which the electronic display device and floor covering are physically connected to each other, but also embodiments in which the electronic display and floor covering are not physically connected to each other, but are abutting, adjacent or in close proximity to each other, or their respective displays have related content, or both. Any of the various possible embodiments of electronic display devices described herein (i.e, electronic display devices 100, 400, 600), or within the scope of the present invention as defined by the claims, may be associated with a floor covering in the foregoing sense.

Fig. 10 illustrates an example of the electric display device and the floor covering including related content. In Fig. 10, the content of the display area 1010 includes an advertisement 1007 showing a graphic image of a person and the words "Got Milk?" The associated floor covering 1005, which in Fig. 10 is shown as attached to the electronic display device, includes related content 1008 (the words "Got Milk?" and a graphic of a milk carton) which complements and enhances the content of the electronic display.

Similarly, Fig. 14 shows a floor covering 1005 with content 1408 including a brand name, "Pampers™" while the display area 1010 of the electronic display device 1000 includes complementary or supplemental content 1407 regarding a sale on the product identified in the floor covering. The embodiment of Fig. 14 shows an example where the electronic display device and the floor covering are not attached to each other but are in close proximity to each other. Fig. 14 further shows that the electronic display device 1000 may comprise a separately articulated base 1414 to enable it to be free-standing and rotated about pivot point 1004. At least a portion of the base 1414 may be no more than 3 inches from the lower edge 1003.

The floor covering 1005 may be formed as any kind of structure or include any material or materials suitable for use in places where there is foot traffic. In embodiments, the floor covering could be formed as a "blotter" similar to devices that are used on desktops to create a working surface, but in this case, to place a static decal or advertisement thereupon. The blotter could be constructed from such materials as, by way of example only, leather, vinyl, plastic, rubber or other similar materials. In other embodiments, the floor covering 1005 could function at least partly as a shoe-cleaning device, and include water and dirt removing or absorbing surfaces; and slip-preventing surfaces. However, the floor covering 1005 need not include such surfaces.

Fig. 15 shows an embodiment wherein the electronic display device 1000 includes an external audio device 1510, such as a speaker. As described in more detail below with respect to further embodiments, the audio device 1510 could generate audible content that was in some way related to a display of the electronic display device 1000. An external unit 1511 could house electronics needed for generating and controlling the content of the electronic display area 1010 and audio output, along the lines of electronics 311 described earlier with reference to Fig. 3. While the speaker is illustrated on the back of the device 1000, it may also be place on either side of the device, or placed within the housing in such a manner that sound is directed from the front of the device through a perforated area on the front surface of the device near the display area.

It should be understood that the above-described embodiments of an electronic display device according to the invention are only illustrative and do not represent all possible configurations. For example, the elongated housing of the electronic display device, as noted earlier, need not be monolithic or uniform as in embodiments 100, 400 or 1000, nor need it be configured as an approximately centrally located module with two substantially similar lateral modules as in embodiment 600. Instead, any portion of the elongated housing or the display area could be differently dimensioned from another portion of the elongated housing or display area. The elongated housing or display area could, for example, comprise curved or streamlined portions. Moreover, any portion of the display areas in the various embodiments as explicitly described herein or within the scope of the claims could be inclined relative to a vertical, where "vertical" means an orientation offset substantially 90° with respect to the floor surface (i.e., at a right angle to the floor surface). Put in other terms, any portion of the display area of the electronic display device could have an angular displacement or angle of inclination relative to the floor between substantially zero and substantially 90°. According to embodiments, the angle of inclination is between 10 and 80 degrees from the vertical, with a preferred range of 10 to 40 degrees, and a still more preferred range of 10 to 20 degrees from the vertical. It should further be understood that the shelving 200 as shown in several of the figures is only one illustrative example of such shelving, and that the present invention may be advantageously utilized in association with different kinds and configurations of shelving.

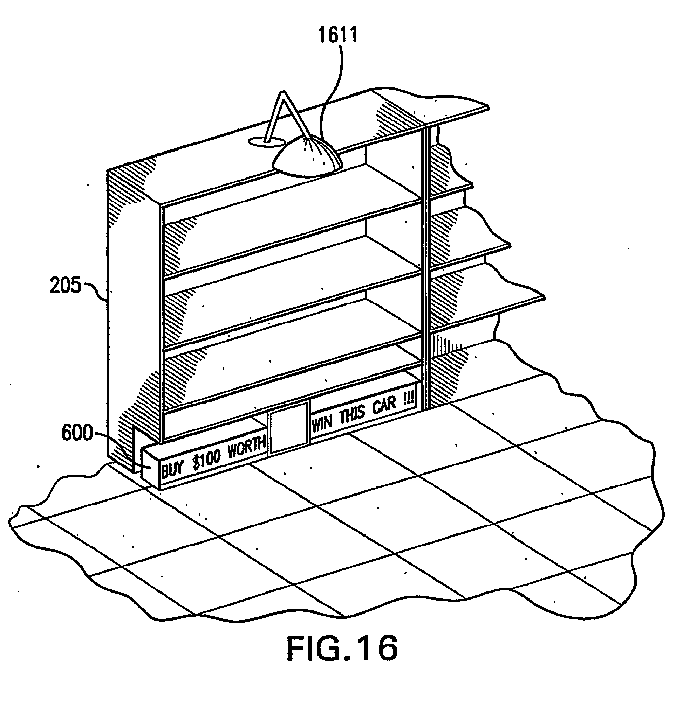

As described earlier with reference to Fig. 3, the various embodiments of the electronic display device according to the present invention may be associated with an audio device that is either completely or partly contained within the same housing, or is completely external. Fig. 16 shows one possible arrangement wherein, for example, the electronic display device according to embodiment 600 may be used in association with an external audio device 1611. The audio device 1611 could, for example, generate audible content that was in some way related to a display of the electronic display device 600. The audio device 1611 could be arranged within a distance from the electronic display device 600 such that sound generated by the audio device 1611 would be audible to a person viewing a display on the electronic display device 600. For example, the audio device 1611 could be affixed or mounted to shelving 205, for example to a top shelf thereof as shown in Fig. 16. Alternatively, the audio device could stand freely on the shelving, be hung from a ceiling, be contained within a ceiling, be affixed to a wall, or otherwise configured. The audio device 1611 could be coupled to the electronic display device 600 either by wire or wirelessly, and receive control signals and content from the electronic display device 600. Alternatively, the audio device 1611 could receive control signals and content from another location, such as a central control location. According to embodiments described in more detail below, such a central control location could control a plurality of electronic display devices and associated audio devices. The central control location could, for example, control the audio device 1611 in accordance with a software program to cause the content of the audio emitted by the audio device 1611 to be related to the display of the electronic display device 600. For example, the audio device 1611 could announce a sale on particular items, while the electronic display device 600 displayed the sale items and their prices.

Advantageously, according to embodiments, the audio device 1611 could be a directional speaker, such as a dual parabolic speaker manufactured by Soundtube™, or the Hypersonic Sound™ system now available from American Technology Corporation, which utilizes hypersonic sound technology or ultra-sonic side bands to produce directional audio. Such a directional speaker could create a confined sound area near the electronic display device 600. A confined sound area is advantageous because a plurality of audio devices could be arranged within a store, along with corresponding electronic display devices. In an environment that contains multiple audio devices as well as other sources of noise, providing a confined sound area using a directional speaker enables audio content from a particular speaker to be more easily understood. While the directional speaker is illustrated on the outside of the device 600, it may also be place on either side of the device 600, or placed within the housing in such a manner that sound is directed from the front of the device through a perforated area on the front surface of the device near the display area. In this case, an array of small speakers may be preferred for creating directional sound.

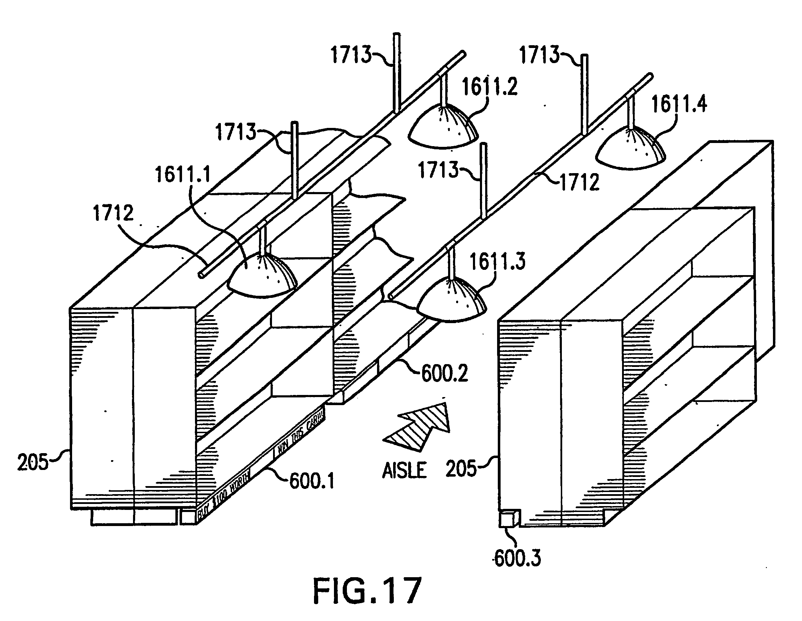

Fig. 17 illustrates a system according to embodiments of the invention that includes a plurality of electronic display devices 600.1-3 and associated audio devices 1611.1-3 as described above, arranged at the base of commercial shelving within a commercial establishment. In Fig. 17, two sets of shelving 205 form an aisle there between. Audio devices 1611.1 and 1611.2 are associated with electronic display devices 600.1 and 600.2 on one side of the aisle, while audio device 1611.3 is associated with electronic display device 600.3 on an opposite side of the aisle. Audio device 1611.4 is similarly associated with an electronic display device that is not shown.

According to embodiments, the electronic display device could include or be associated with an interactive feature. The interactive feature would cause the display area and or the audio device to become active (i.e., to display video content or output audio content following a dormant or inactive period during which no video or audio content was output) upon detection of the approach or proximity of a person. For example, the electronic display device could include or be coupled to a motion detector configured for this purpose.

Audio device 1611.1 may be; as described above, a directional speaker, so that sound from speaker 1611.1 will be mostly focused directly over the head of a person standing near electronic display device 1611.1. For example, the person may be standing in front of electronic display device 1611.1 and viewing a display thereon. Speaker 1611.1 will provide clear focused sound to a person standing mostly directly below it, but the sound will drop off quickly as the person moves away from a focused area or radius below the speaker. Thus, speaker 1611.1 can provide a first confined sound area to deliver a first kind of content to a person standing in front of electronic display device 1611.1, while speaker 1611.2 can provide a second confined sound area to provide a second kind of content, either the same or different from the first, to a person standing in front of electronic display device 600

As further shown in Fig. 17, audio devices 1611.1-4 could be attached to tracks 1712 suspended from supports 1713. The tracks could include a conductive member or members to provide an electrical power contact and/or an audio signal.

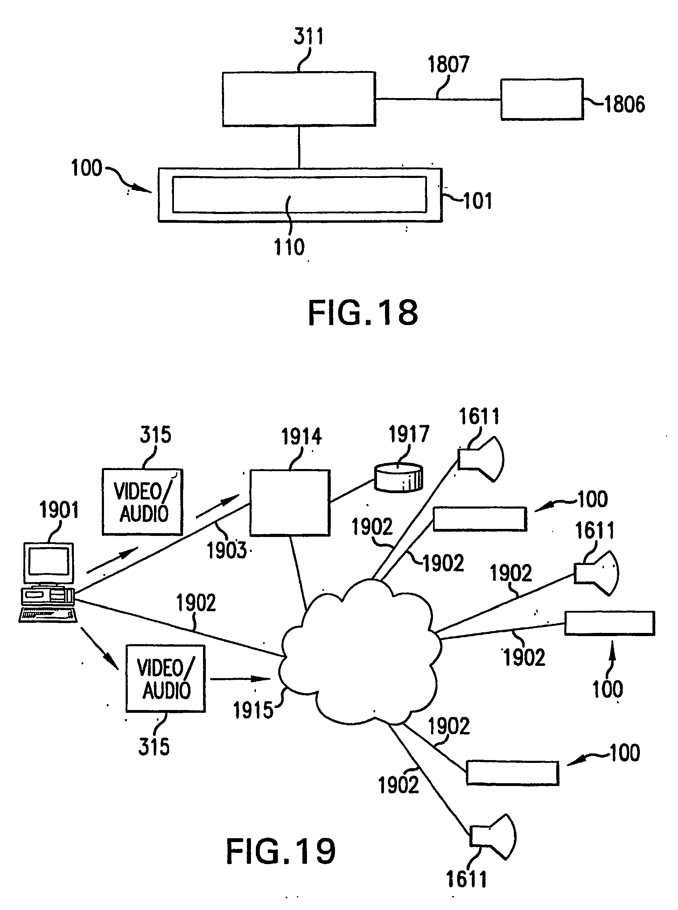

As discussed above, it is envisioned that to utilize the electronic display device to good effect, it will be deployed in numbers throughout a commercial establishment, and output video and audio content related to nearby goods and products. Accordingly, there will be a need to efficiently configure such a plurality of electronic display devices, each, potentially, with different content. Several techniques are contemplated for doing this. In one technique, the configuring may be done locally. Referring now to Fig. 18, a user may physically connect a hand-held controller/storage device (CSD) 1806 to each electronic display device via a direct cable link 1807 to a connector on the electronic display device, and download digital data for generating desired display content and/or audio information from the CSD 1806 to the electronic display device and/or speakers. The digital data could include software for controlling the display content, e.g., software implementing a schedule of advertisements. The content corresponding to the downloaded data may be displayed until it is replaced by different content in the same manner.

The downloading may be effected using any of various known I/O techniques. For example, the CSD could be coupled to a Universal Serial Bus (USB) of an onboard computer of the electronic display device. The onboard computer could also be configured with other I/O ports to receive the data.

In other embodiments, the configuring of the content of the plurality of electronic display devices could be done remotely from a central control location. For example, as shown in Fig. 19, a plurality of electronic display devices 100 and associated audio devices 1611 within a given commercial establishment could be included in a network 1915. Such a network configuration may be referred to as a LAN (local area network). The network could further include a central controller 1914 which could be a file server, a workstation, a mainframe computer, or other programmable logic and control apparatus. The central controller could be coupled to a database 1917 containing video/audio content and associated control software. A user device 1901, such as a personal computer, laptop computer, CSD or the like, may interface with central controller 1914 either through a direct wired or wireless connection 1903, or by logging on to the network 1915 through a wired or wireless network connection 1902. A wireless connection could be made, for example, via IRDA (Infrared Data Association), or RF (radio frequency) if there is limited line of sight between devices. A wired connection could be made, for example, via a USB link.

The user may then download video and audio content 315 either locally, or from a remote location via its network connection, to the central controller. The video and/or audio content 315 may include software for controlling the display content. The central controller in turn may download the content, via a network connection, to the electronics of each connected electronic display device. Alternatively, the user could simply direct the central controller to retrieve video/audio content and associated control software from the database 1917. In accordance with either method, the central controller may then distribute different content to different electronic display devices and associated audio devices in accordance with a software program that it executes. The program could, for example, implement a schedule of various advertisements or promotions to be displayed on various electronic display devices distributed throughout the commercial establishment. The electronics of each electronic display device could then transmit the received audio content to an associated audio device, either housed within the electronic display device or arranged in the vicinity thereof, as described above in connection with Fig. 17. Alternatively, as shown in Fig. 19, the central controller could transmit audio content directly to the associated audio devices of respective display devices via a network connection. After a period of time of outputting a first content on the plurality of electronic display devices and associated audio devices, the first content may be updated or replaced with a second content different from the first by the above-described process.

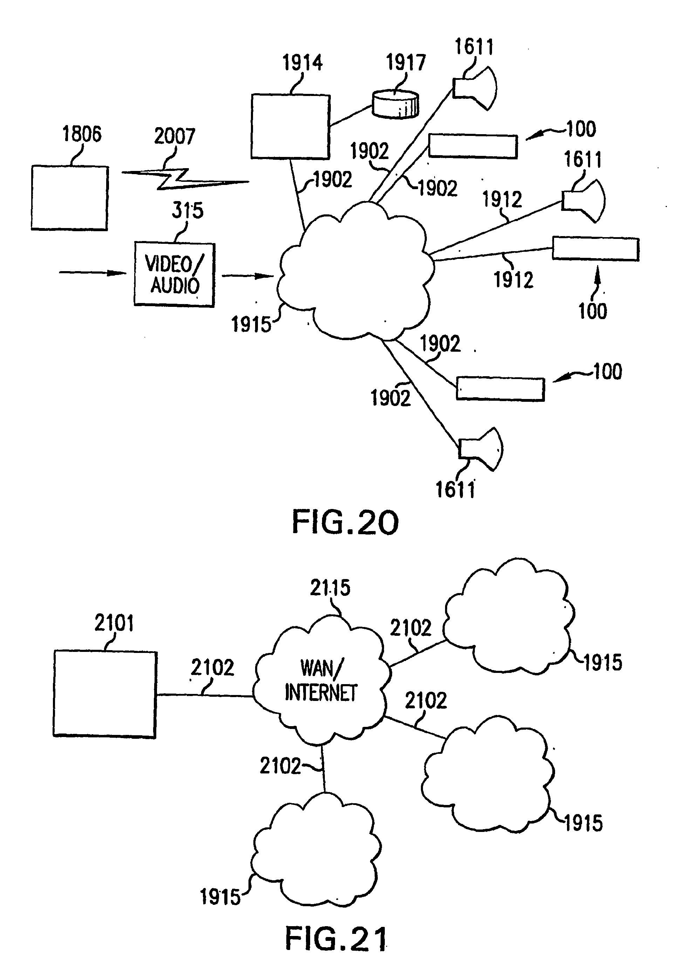

In still other embodiments, a user does not need to log onto a network, but need only be in the vicinity of the establishment in which the plurality of electronic display devices are located, and configure the electronic display devices wirelessly from as much as 100 feet away or more. As shown in Fig. 20, the user could, for example, have a laptop computer or CSD 1806 equipped with a short-range wireless transmitter that can send a wireless signal 2007 to communicate with each electronic display device in a commercial establishment via, for example, CDMA (code division multiple access) or other similar communication protocol. In this way, video and/or audio content 315 can be wirelessly downloaded to each electronic display device without going through a LAN. Alternatively, the same short-range wireless transmission could be used to send content to a LAN server 1914, which would then distribute the content to each electronic display device.

In other embodiments, remote communication with and configuring of a plurality of electronic display devices in multiple different commercial establishments is possible. This may be accomplished, for example, with a

WAN (wide area network) configuration. More specifically, as shown in Fig. 21, a central control location 2101 may be linked via a wired or wireless connection 2102 to the Internet or some other wired or wireless (e.g., satellite) WAN 2115 to a local server or host associated with each establishment. The local server is in turn linked by wire or wireless means to a plurality of electronic display devices arranged in the establishment, as described above. Video and/or audio content may then be downloaded from the central control location 2101 to each local server, which then transmits the content to the plurality of electronic display devices and associated audio devices. Since typically it will be desirable to have different electronic display devices in the same establishment display varying content, each electronic display device could have a unique identifier code assigned to it. This identifier code could be provided in a header of the digital data corresponding to the content intended for a particular electronic display device. The header information could be used to ensure that each electronic display device and associated audio device received the content intended for it.

As a variation of the WAN download technique described above, satellite network download can used where the WAN is provided via satellite constellation. Here, the satellite broadcasts content in a point-to-multi-point configuration. The broadcast content is received by receivers, for example dish receivers, associated with each establishment. The received content may then be disseminated to various electronic display devices by a LAN configuration as described above. Satellite systems such as Motorola's Iridium, Hughes' direct TV, and Boeing Digital Cinema have already demonstrated capabilities as described in the foregoing in other unrelated industries.

In embodiments, the electronic display device may be linked to a POS (point of sale) system of an establishment. A POS system is used to gather information about consumer preferences. Information about the effectiveness of specific advertising content in generating sales could be gathered, for example, by correlating sales of a given item in an establishment with the timing of given content displayed on an electronic display device. This could be accomplished, for example, by electronically cross-referencing sales transactions, at the time they occur, with the scheduling of particular advertising for display on the electronic display device. To provide this scheduling information to the POS system, the electronic display device could be connected directly to computers or servers of the POS system. Alternatively, a server of the electronic display device could control the scheduling of content on the various electronic display devices of an establishment, and provide the scheduling information to a server of the POS system so that it could be correlated in "real time," i.e., contemporaneously, with sales transactions. Alternatively, the scheduling information could be correlated with sales records "offline" at a later time.

Several embodiments of the present invention are specifically illustrated and/or described herein. However, it will be appreciated that the present invention is defined solely by the appended claims.

## Claims

1. An electronic display device (100, 400, 600, 1000) associated with a space (202) between a floor (203) and a superior ledge of a commercial shelving (205), a lower surface (201) of the superior ledge being within 304.8 mm (12 inches) of the floor, the electronic display device being configured to be at least partly received within the space, the electronic display device comprising a portable, free-standing housing (101, 401, 601, 1001), and an elongated display area (110, 410, 706, 708, 712, 1010) having a length (L, L1, L2, L3) that is at least twice a height (H, H1, H2) thereof, the height of the display area being between 25.4 mm (1 inch) and 304.8 mm (12 inches), the display area having a lower edge (103, 403, 707, 709, 713, 1003) at least a portion of which is within 76.2 mm (3 inches) of a base (104, 404, 612, 613, 614, 714, 1414) of the housing, and the display being configurable to display arbitrary content (315, 1007, 1008, 1407, 1408) including at least one of static, moving, and scrolling alphanumeric data and graphic images, the content being changeable by a computer, electronic controller or other electronic device.

2. The electronic display device of claim 1, wherein the length is between 254.0 and 2032.0 mm (10 and 80 inches).

3. The electronic display device of claim 1, wherein the length is between 508.0 and 1016.0 mm (20 and 40 inches).

4. The electronic display device of claim 1, wherein the height is between 50.8 and 203.2 mm (2 and 8 inches).

5. The electronic display device of claim 1, wherein the height is between 101.6 and 152. 4 mm (4 and 6 inches).

6. The electronic display device of claim 1, wherein at least a portion (602, 603, 604) of the display area is inclined.

7. The electronic display device of claim 1, wherein an incline of at least a portion of the display area is adjustable.

8. The electronic display device of claim 1, wherein a first portion of at least one of the housing and corresponding display area is formed differently from a second portion of at least one of the housing and corresponding display area.

9. The electronic display device of claim 1, wherein at least one of the housing and corresponding display area comprise separately articulated portions.

10. The electronic display device of claim 9 wherein the separately articulated portions comprise two substantially similar modules that are laterally arranged with respect to an approximately central module.

11. The electronic display device of claim 1, wherein the electronic display device is associated with a floor covering (1003, 1005).

12. The electronic display device of claim 11, wherein the electronic display device is rotatably coupled to the floor covering.

13. The electronic display device of claim 11, wherein the display area is configurable to display content related to content displayed on the floor covering.

14. The electronic display device of claim 1, wherein the electronic display device is associated with an audio device (314, 1510, 1611).

15. The electronic display device of claim 14, wherein the audio device is external to the electronic display device.

16. The electronic display device of claim 14, wherein the audio device is a directional speaker.

17. The electronic display device of claim 14, further comprising an interactive feature to activate one of the display area and the audio device in response to the approach or proximity of a person.

18. The electronic display device of claim 17, wherein the interactive feature comprises a motion detector.

19. The electronic display device of claim 1, wherein the space is approximately 304.8 mm (12 inches) high.

20. The electronic display device of claim 1, wherein the space is approximately 914.4 mm (36 inches) deep.

21. The electronic display device of claim 1, wherein the space is at least 304.8 mm (12 inches) long.

22. A dynamic electronic advertising system comprising:
an electronic display device (100, 400, 600, 1000), according to any one of claims 1-21
a controller (312),
a communication means (314), and
an electric power source (321), the system providing sales information to a customer at or near product shelving (205) in a store, wherein the electronic display device presents an elongated display area (110, 410, 706, 708, 712, 1010) having an angular displacement greater than zero and less than or equal to 90° relative to the floor, for viewing thereof by the customer.

23. The system of claim 22, further comprising a configuring apparatus for configuring the plurality of electronic display device with arbitrary content.

24. The system of claim 23, wherein the configuring apparatus is adapted to configure the electronic display device locally.

25. The system of claim 23, wherein the configuring apparatus is adapted to configure the electronic display device remotely.

26. The system of claim 23, wherein the configuring apparatus includes a handheld controller/storage device (1806).

27. The system of claim 23, wherein the configuring apparatus includes a local area network (1915).

28. The system of claim 23, wherein the configuring apparatus includes a wide area network (2115).

29. A method for dynamic electronic advertising comprising:
providing an electronic display device (100, 400, 600, 1000) according to claim 1;
arranging elongated electronic display area at least partly within a space (202) defined by a floor (203) and a superior ledge of a commercial shelving (205) in a commercial establishment, the display area having a length (L, L1, L2, L3) that is at least twice a height (H, H1, H2) thereof, the height being 304.8 mm (12 inches) or less, the display area having a lower edge (103, 403, 707, 709, 713, 1003) at least a portion of which is within 76.2 mm (3 inches) of a base (104, 404, 612, 613, 614, 714, 1414) of the housing; and
displaying arbitrary content (315, 1007, 7008, 1407, 1408) in the display area, the content including at least one of static, moving and scrolling alphanumeric data and graphic images.

30. The method of claim 29, wherein the content relates to goods or products stored on shelving of the commercial establishment and comprises at least one of advertising content, promotional content, product description and pricing information.

31. The method of claim 29, further comprising providing an audio device (314, 1510, 1611) associated with electronic display device.

32. The method of claim 31, further comprising using the audio device to provide a confined sound area.

33. The method of claim 32, further comprising outputting related content on the electronic display device and the audio device.

34. The method of claim 29, further comprising updating a first content with a second content different from the first.

35. The method of claim 29, further comprising:
providing a plurality of the electronic display devices within the commercial establishment; and
controlling the content via a central controller (1914) linked to the plurality of electronic display devices.

36. The method of claim 35, wherein the central controller is linked to the plurality of electronic display devices via at least one of a local area network (1915) and a wide area network (2115).

37. The method of claim 29, further comprising correlating sales information with a schedule of the content.

## Patentansprüche

1. Elektronische Anzeigevorrichtung (100, 400, 600, 1000), die einem Raum (202) zwischen einem Boden (203) und einem darüber liegenden Regalbrett eines kommerziellen Regals (205) zugeordnet ist, wobei eine untere Oberfläche (201) des darüber liegenden Regalbretts innerhalb von 304,8 mm (12 inches) des Bodens liegt, wobei die elektronische Anzeigevorrichtung so ausgestaltet ist, daß sie wenigstens partiell in dem Raum aufgenommen ist, wobei die elektronische Anzeigevorrichtung ein tragbares freistehendes Gehäuse (101, 401, 601, 1001) und einen langgestreckten Anzeigebereich (110, 410, 706, 708, 712, 1010) aufweist, der eine Länge (L, L1, L2, L3) besitzt, die wenigstens das Zweifache seiner Höhe (H, H1, H2) beträgt, wobei die Höhe des Anzeigebereiches zwischen 25,4 mm (1 inch) und 304,8 mm (12 inches) liegt, wobei der Anzeigebereich eine untere Kante (103, 403, 707, 709, 713, 1003) besitzt, von der wenigstens ein Teilbereich innerhalb von 76,2 mm (3 inches) von einer Basis (104, 404, 612, 612, 614, 714, 1414) des Gehäuses liegt, und wobei die Anzeige so konfigurierbar ist, daß sie willkürlichen Inhalt (315, 1007, 1008, 1407, 1408) einschließlich wenigstens eines von statischen, sich bewegenden, scrollenden alphanumerischen Daten und grafischen Bildern anzeigt, wobei der Inhalt durch einen Computer, eine elektronische Steuerung oder eine andere elektronische Vorrichtung änderbar ist.

2. Elektronische Anzeigevorrichtung nach Anspruch 1, wobei die Länge zwischen 254,0 und 2.032,0 mm (10 und 80 inches) liegt.

3. Elektronische Anzeigevorrichtung nach Anspruch 1, wobei die Länge zwischen 508,0 und 1.016,0 mm (20 und 40 inches) liegt.

4. Elektronische Anzeigevorrichtung nach Anspruch 1, wobei die Höhe zwischen 50,8 und 203,2 mm (2 und 8 inches) liegt.

5. Elektronische Anzeigevorrichtung nach Anspruch 1, wobei die Höhe zwischen 101,6 und 152,4 mm (4 und 6 inches) liegt.

6. Elektronische Anzeigevorrichtung nach Anspruch 1, wobei wenigstens ein Abschnitt (602, 603, 604) des Anzeigebereiches geneigt ist.

7. Elektronische Anzeigevorrichtung nach Anspruch 1, wobei eine Neigung wenigstens eines Abschnittes des Anzeigebereiches einstellbar ist.

8. Elektronische Anzeigevorrichtung nach Anspruch 1, wobei ein erster Abschnitt zumindest von dem Gehäuse oder dem entsprechenden Anzeigebereich anders ausgeformt ist als ein zweiter Abschnitt zumindest von dem Gehäuse oder dem entsprechenden Anzeigebereich.

9. Elektronische Anzeigevorrichtung nach Anspruch 1, wobei zumindest das Gehäuse oder der entsprechende Anzeigebereich separat angelenkte Abschnitte umfaßt.

10. Elektronische Anzeigevorrichtung nach Anspruch 9, wobei die separat angelenkten Abschnitte zwei im wesentlichen ähnliche Module umfassen, die bezüglich eines im wesentlichen zentralen Moduls seitlich angeordnet sind.

11. Elektronische Anzeigevorrichtung nach Anspruch 1, wobei die elektronische Anzeigevorrichtung mit einer Fußbodenabdeckung (1003, 1005) verbunden ist.

12. Elektronische Anzeigevorrichtung nach Anspruch 11, wobei die elektronische Anzeigevorrichtung drehbar mit der Fußbodenabdeckung gekoppelt ist.

13. Elektronische Anzeigevorrichtung nach Anspruch 11, wobei der Anzeigebereich so konfigurierbar ist, daß er Inhalte anzeigt, die in Beziehung zu auf der Fußbodenabdeckung angezeigten Inhalten stehen.

14. Elektronische Anzeigevorrichtung nach Anspruch 1, wobei die elektronische Anzeigevorrichtung mit einer Audiovorrichtung (314, 1010, 1611) verbunden ist.

15. Elektronische Anzeigevorrichtung nach Anspruch 14, wobei die Audiovorrichtung extern bezüglich der elektronischen Anzeigevorrichtung ist.

16. Elektronische Anzeigevorrichtung nach Anspruch 14, wobei die Audiovorrichtung ein Richtlautsprecher ist.

17. Elektronische Anzeigevorrichtung nach Anspruch 14, ferner umfassend einen interaktiven Bestandteil, um den Anzeigebereich oder die Audiovorrichtung in Antwort auf das Annähern oder die Nähe einer Person zu aktivieren.

18. Elektronische Anzeigevorrichtung nach Anspruch 17, wobei der interaktive Bestandteil einen Bewegungsdetektor umfaßt.

19. Elektronische Anzeigevorrichtung nach Anspruch 1, wobei der Raum ungefähr 304,8 mm (12 inches) hoch ist.

20. Elektronische Anzeigevorrichtung nach Anspruch 1, wobei der Raum ungefähr 914,4 mm (36 inches) tief ist.

21. Elektronische Anzeigevorrichtung nach Anspruch 1, wobei der Raum wenigstens 304,8 mm (12 inches) lang ist.

22. Dynamisches elektronisches Ankündigungssystem umfassend:
eine elektronische Anzeigevorrichtung (100, 400, 600, 1000) nach einem der Ansprüche 1-21,
einen Controller (312),
Kommunikationsmittel (314) und
eine elektrische Energiequelle (321), wobei das System Verkaufsinformationen einem Kunden an oder nahe einem Produktregal (205) in einem Geschäft zur Verfügung stellt, wobei die elektronische Anzeigevorrichtung einen langgestreckten Anzeigebereich (110, 410, 706, 708, 712, 1010) besitzt, der einen Winkelversatz größer als 0 und kleiner oder gleich 90° relativ zum Boden besitzt, um von dem Kunden betrachtet zu werden.

23. System nach Anspruch 22, ferner umfassend eine Einstellvorrichtung zum Einstellen einer Vielzahl von elektronischen Anzeigevorrichtungen mit willkürlichem Inhalt.

24. System nach Anspruch 23, wobei die Einstellvorrichtung dazu ausgebildet ist, die elektronische Anzeigevorrichtung vor Ort zu konfigurieren.

25. System nach Anspruch 23, wobei die Einstellvorrichtung dazu ausgebildet ist, die elektronische Anzeigevorrichtung aus der Ferne zu konfigurieren.

26. System nach Anspruch 23, wobei die Einstellvorrichtung eine tragbare Controller-/Speichervorrichtung (1806) umfaßt.

27. System nach Anspruch 23, wobei die Einstellvorrichtung ein lokales Netzwerk (1915) umfaßt.

28. System nach Anspruch 23, wobei die Anzeigevorrichtung ein Fernnetz (2115) umfaßt.

29. Verfahren zum dynamischen elektronischen Ankündigen, umfassend:
Zurverfügungstellen einer elektronischen Anzeigevorrichtung (100, 400, 600, 1000) gemäß Anspruch 1,
Anordnen eines langgestreckten elektronischen Anzeigebereichs zumindest teilweise innerhalb eines Raumes (202), der von einem Boden (203) und einem darüberliegenden Regalboden eines kommerziellen Regals (205) in einer kommerziellen Einrichtung definiert wird, wobei der Anzeigebereich eine Länge (L, L1, L2, L3) besitzt, die wenigstens das Zweifache seiner Höhe (H, H1, H2) beträgt, wobei die Höhe 304,8 mm (12 inches) oder weniger beträgt, wobei der Anzeigebereich eine untere Kante (103, 403, 707, 709, 713, 1003) besitzt, von der wenigstens ein Abschnitt innerhalb von 76,2 mm (3 inches) von einer Basis (104, 404, 612, 613, 614, 714, 1414) des Gehäuses liegt, und
Anzeigen von willkürlichem Inhalt (315, 1007, 7008, 1407, 1408) in dem Anzeigebereich, wobei der Inhalt wenigstens eines der folgenden umfaßt: statische, bewegende und scrollende alphanumerische Daten und grafische Bilder.

30. Verfahren nach Anspruch 29, wobei der Inhalt sich auf in dem Regal in der kommerziellen Einrichtung befindende Waren oder Produkte bezieht und wenigstens eines der folgenden umfaßt: Werbeinhalte, Promotionsinhalte, Produktbeschreibung und Preisinformation.

31. Verfahren nach Anspruch 29, ferner umfassend das Zurverfügungstellen einer Audiovorrichtung (313, 1510, 1611), die mit der elektronischen Anzeigevorrichtung verbunden ist.

32. Verfahren nach Anspruch 31, ferner umfassend das Benutzen der Audiovorrichtung, um einen beschränkten Soundbereich zur Verfügung zu stellen.

33. Verfahren nach Anspruch 31, ferner umfassend das Ausgeben von aufeinander bezogenen Inhalten auf der elektronischen Anzeigevorrichtung und der Audiovorrichtung.

34. Verfahren nach Anspruch 29, ferner umfassend das Updaten eines ersten Inhaltes mit einem zweiten Inhalt, der von dem ersten verschieden ist.

35. Verfahren nach Anspruch 29, ferner umfassend:
Zurverfügungstellen einer Vielzahl der elektronischen Anzeigevorrichtungen in der kommerziellen Einrichtung und
Kontrollieren des Inhaltes mittels eines zentralen Controllers (1914), der mit der Vielzahl der elektronischen Anzeigevorrichtungen verbunden ist.

36. Verfahren nach Anspruch 35, wobei der zentrale Controller über zumindest ein lokales Netzwerk (1915) oder ein Fernnetz (2115) mit der Vielzahl der elektronischen Anzeigevorrichtungen verbunden ist.

37. Verfahren nach Anspruch 29, ferner umfassend das Korrelieren der Verkaufsinformationen mit einem Ablaufplan des Inhalts.

## Revendications

1. Dispositif d'affichage électronique (100, 400, 600, 1000) associé à un espace (202) situé entre un sol (203) et un rebord supérieur d'une tablette de commerce (205), une surface inférieure (201) du rebord supérieur se trouvant à 304,8 mm (12 pouces) du sol, le dispositif d'affichage électronique étant configuré pour être au moins partiellement reçu dans l'espace, le dispositif d'affichage électronique comprenant un logement portable sur pied (101, 401, 601, 1001), et une zone d'affichage allongée (110, 410, 706, 708, 712, 1010) ayant une longueur (L, L1, L2, L3) qui fait au moins deux fois une hauteur (H, H1, H2) de celle-ci, la hauteur de la zone d'affichage se trouvant entre 25,4 mm (1 pouce) et 304,8 mm (12 pouces), la zone d'affichage ayant un bord inférieur (103, 403, 707, 709, 713, 1003) dont au moins une partie se trouve à 76,2 mm (3 pouces) d'une base (104, 404, 612, 613, 614, 714, 1414) du logement, et l'affichage pouvant être configuré pour afficher un contenu arbitraire (315, 1007, 1008, 1407, 1408) incluant au moins un élément parmi des images statiques, des images mobiles et des données alphanumériques de défilement et des images graphiques, dont le contenu peut changer par un ordinateur, un dispositif de commande électronique ou autre dispositif électronique.

2. Dispositif d'affichage électronique selon la revendication 1, dans lequel la longueur se trouve entre 254,0 et 2032,0 mm (10 et 80 pouces).

3. Dispositif d'affichage électronique selon la revendication 1, dans lequel la longueur se trouve entre 508,0 et 1016,0 mm (20 et 40 pouces).

4. Dispositif d'affichage électronique selon la revendication 1, dans lequel la hauteur se trouve entre 50,8 et 203,2 mm (2 et 8 pouces).

5. Dispositif d'affichage électronique selon la revendication 1, dans lequel la hauteur se trouve entre 101,6 et 152,4 mm (4 et 6 pouces).

6. Dispositif d'affichage électronique selon la revendication 1, dans lequel au moins une partie (602, 603, 604) de la zone d'affichage est inclinée.

7. Dispositif d'affichage électronique selon la revendication 1, dans lequel une inclinaison d'au moins une partie de la zone d'affichage peut être réglée.

8. Dispositif d'affichage électronique selon la revendication 1, dans lequel une première partie d'au moins un élément parmi le logement et la zone d'affichage correspondante est formée de façon différente d'une seconde partie d'au moins un élément parmi le logement et la zone d'affichage correspondante.

9. Dispositif d'affichage électronique selon la revendication 1, dans lequel au moins un élément parmi le logement et la zone d'affichage correspondante comprend des parties séparément articulées.

10. Dispositif d'affichage électronique selon la revendication 9, dans lequel les parties séparément articulées comprennent deux modules sensiblement similaires qui sont latéralement agencés par rapport à un module approximativement central.

11. Dispositif d'affichage électronique selon la revendication 1, dans lequel le dispositif d'affichage électronique est associé à un revêtement de sol (1003, 1005).

12. Dispositif d'affichage électronique selon la revendication 11, dans lequel le dispositif d'affichage électronique est couplé de manière rotative au revêtement de sol.

13. Dispositif d'affichage électronique selon la revendication 11, dans lequel la zone d'affichage peut être configurée pour afficher un contenu lié au contenu affiché sur le revêtement de sol.

14. Dispositif d'affichage électronique selon la revendication 1, dans lequel le dispositif d'affichage électronique est associé à un dispositif audio (314, 1510, 1611).

15. Dispositif d'affichage électronique selon la revendication 14, dans lequel le dispositif audio est extérieur au dispositif d'affichage électronique,

16. Dispositif d'affichage électronique selon la revendication 14, dans lequel le dispositif audio est un haut-parleur directionnel.

17. Dispositif d'affichage électronique selon la revendication 14, comprenant en outre un accessoire interactif pour activer la zone d'affichage ou le dispositif audio en réponse à l'approche ou à la proximité d'une personne.

18. Dispositif d'affichage électronique selon la revendication 17, dans lequel l'accessoire interactif comprend un détecteur de mouvement.

19. Dispositif d'affichage électronique selon la revendication 1, dans lequel l'espace fait approximativement 304,8 mm (12 pouces) de haut.

20. Dispositif d'affichage électronique selon la revendication 1, dans lequel l'espace fait approximativement 914,4 mm (36 pouces) de profondeur.

21. Dispositif d'affichage électronique selon la revendication 1, dans lequel l'espace fait au moins 304,8 mm (12 pouces) de long.

22. Système de publicité électronique dynamique comprenant :
un dispositif d'affichage électronique (100, 400, 600, 1000) selon l'une quelconque des revendications 1 à 21,
un dispositif de commande (312),
un moyen de communication (314), et
une source d'alimentation électrique (321), le système donnant des informations de vente à un client se trouvant au niveau ou près de la tablette de produits (205) dans un magasin, le dispositif d'affichage électronique présentant une zone d'affichage allongée (110, 410, 708, 712, 1010) ayant un déplacement angulaire supérieur à zéro et inférieur ou égal à 90° par rapport au sol, pour que le client le voit.

23. Système selon la revendication 22, comprenant en outre un appareil de configuration destiné à configurer la pluralité de dispositifs d'affichage électroniques avec un contenu arbitraire.

24. Système selon la revendication 23, dans lequel l'appareil de configuration est adapté pour configurer le dispositif d'affichage électronique localement.

25. Système selon la revendication 23, dans lequel l'appareil de configuration est adapté pour configurer le dispositif d'affichage électronique à distance.

26. Système selon la revendication 23, dans lequel l'appareil de configuration inclut un dispositif de stockage/commande portable (1806).

27. Système selon la revendication 23, dans lequel l'appareil de configuration inclut un réseau local (1915).

28. Système selon la revendication 23, dans lequel l'appareil de configuration inclut un réseau étendu (2115).

29. Procédé pour publicité électronique dynamique comprenant :
le fait de prévoir un dispositif d'affichage électronique (100, 400, 600, 1000) selon la revendication 1 ;
le fait d'agencement une zone d'affichage électronique allongée au moins partiellement dans un espace (202) défini par un sol (203) et un rebord supérieur d'une tablette de commerce (205) dans un établissement commercial, la zone d'affichage ayant une longueur (L, L1, L2, L3) qui fait au moins deux fois une hauteur (H, H1, H2) de celle-ci, la hauteur étant de 304,8 mm (12 pouces) ou moins, la zone d'affichage ayant un bord inférieur (103, 403, 707, 709, 713, 1003) dont au moins une partie se trouve à 76,2 mm (3 pouces) d'une base (104, 404, 612, 613, 614, 714, 1414) du logement ; et
le fait d'afficher un contenu arbitraire (315, 1007, 7008, 1407, 1408) dans la zone d'affichage, le contenu incluant au moins un élément parmi des images statiques, des images mobiles et des données alphanumériques de défilement et des images graphiques.

30. Procédé selon la revendication 29, dans lequel le contenu concerne des articles ou produits stockés sur une tablette de l'établissement commercial et comprend au moins un élément parmi un contenu publicitaire, un contenu promotionnel, une description de produit et des informations de prix.

31. Procédé selon la revendication 29, comprenant en outre le fait de prévoir un dispositif audio (314, 1510, 1611) associé au dispositif d'affichage électronique,

32. Procédé selon la revendication 31, comprenant en outre l'utilisation du dispositif audio pour fournir une zone sonore confinée.

33. Procédé selon la revendication 32, comprenant en outre le fait de sortir un contenu associé sur le dispositif d'affichage électronique et le dispositif audio.

34. Procédé selon la revendication 29, comprenant en outre la mise à jour d'un premier contenu avec un second contenu différent du premier.

35. Procédé selon la revendication 29, comprenant en outre :
le fait de prévoir une pluralité de dispositifs d'affichage électroniques dans l'établissement commercial ; et
le fait de commander le contenu via un dispositif de commande central (1914) relié à la pluralité de dispositifs d'affichage électroniques.

36. Procédé selon la revendication 35, dans lequel le dispositif de commande central est relié à la pluralité de dispositifs d'affichage électroniques via au moins un réseau parmi un réseau local (1915) et un réseau étendu (2115).

37. Procédé selon la revendication 29, comprenant en outre la corrélation d'informations de vente avec un programme du contenu.
